# EUROPEAN PATENT SPECIFICATION

(11) **EP 2 157 308 B1**
(45) Date of publication and mention of the grant of the patent: **03.04.2013**
(21) Application number: 08738591.0
(22) Date of filing: 15.04.2008
(51) Int. Cl.: F02M 25/00, F01M 1/08, F01M 1/16, F02M 37/00, F01M 3/02, F01M 3/04, F02D 19/12, F02M 43/00

(54) **METHOD AND DEVICE FOR PREVENTING SCUFFING OF INTERNAL COMBUSTION ENGINE FOR VESSEL**
VERFAHREN UND VORRICHTUNG ZUM VERHINDERN VON ABSCHEUERN EINES VERBRENNUNGSMOTORS FÜR EIN SCHIFF
PROCÉDÉ ET DISPOSITIF DESTINÉS À EMPÊCHER L'USURE PAR FROTTEMENT D'UN MOTEUR MARIN À COMBUSTION INTERNE

(30) Priority: 18.05.2007 JP 2007133095
(43) Date of publication of application: 24.02.2010
(73) Proprietor: IHI Corporation, Tokyo 135-8710 (JP)
(72) Inventor: SAITO, Yoshiyuki, Tokyo 135-8710 (JP)
(74) Representative: Köhler, Walter
(86) International application number: PCT/JP2008/000985
(87) International publication number: WO 2008/142827

(56) References cited:
- WO-A1-2004/113749
- CH-A5- 673 506
- DE-A1- 10 220 015
- JP-A- 09 236 006
- JP-A- 51 120 588
- JP-A- 2001 050 070
- JP-A- 2007 040 165

## Description

### Technical Field

The present invention relates to a method and an apparatus for prevention of scuffing in an internal combustion engine for a vessel.

### Background Art

Generally with respect to an internal combustion engine for a vessel, fuel stored in a fuel tank is pumped by a fuel pump and is supplied through fuel injection valves into respective cylinders in the engine.

General technical level on fuel supply to an internal combustion engine for a vessel is disclosed, for example, in Document JP 2004-308528A. Document DE 102 20 015 A1 describes a method for the injection of lubricant into the cylinders of a combustion engine wherein a lubricant pump is actuated depending on the engine speed. Document CH 673 506 A5 describes an apparatus for lubricating the cylinders of a combustion engine wherein the injection rate of lubricant into the cylinders of the engine is controlled depending on operating data of the engine.

### Summary of Invention

### Technical Problems

When an engine speed is varied, for example, upon arrival in or leaving from a port or during passage through a canal, a sliding state of a piston ring becomes severe against a cylinder liner, resulting in scratches on a sliding surface of the liner. This tends to cause so-called scuffing during succeeding operations; however, conventionally no special consideration has been taken during such engine speed variation.

Moreover, fuel contains hard ceramic particles such as alumina and silica used as reforming catalysts for the fuel, so that evacuation of the fuel reduced in stored quantity in a fuel tank through a bottom of the tank also brings about evacuation of high concentration of hard particles deposited on the bottom of the tank together with the fuel. The evacuated hard particles, which cannot be completely removed by a fuel purifier or filter, enter in large quantity into the engine. Especially when the hard particles enter in large quantity into the engine during engine speed variation, the sliding state of the piston ring becomes further severe against the cylinder liner, resulting in formation of initiation points of scuffing. And, disadvantageously, scuffing is generated in succeeding high-load operations.

The invention was made in view of the above and has its object to provide a method and an apparatus for prevention of scuffing in an internal combustion engine for a vessel which can alleviate a sliding state of a piston ring from becoming severe against a cylinder liner during engine speed variation and can prevent generation of scuffing.

### Solution to Problems

The invention is directed to a method for prevention of scuffing in an internal combustion engine for a vessel wherein fuel stored in a fuel tank is evacuated, is pumped by a fuel pump and is supplied through fuel injection valves into respective cylinders in the engine,
the method which comprises detecting and monitoring an engine speed, fuel with fuel level higher than a preset value being supplied into the respective cylinders in the engine while a scuffing inhibitor is supplied into the respective cylinders.

In the above-mentioned construction, the engine speed is detected and monitored, the fuel with the fuel level higher than the preset value and with a low concentration of hard particles being supplied into the respective cylinders in the engine while the scuffing inhibitor is supplied into the respective cylinders.

As a result, during engine speed variation, the hard particles are prevented from entering in large quantity into the engine while the scuffing inhibitor is supplied into the respective cylinders in the engine, so that the sliding state of the piston ring is alleviated from becoming severe against the cylinder liner and initiation points of scuffing become hard to form and no scuffing is generated in the succeeding high-load operations.

In said prevention method, a plurality of fuel tanks may be provided for evacuation of the fuel from any desired fuel tank; if there exits the fuel tank with the fuel level being reduced below the preset value, the fuel can be supplied into the respective cylinders in the engine preferentially from said fuel tank with the fuel level being reduced below the preset value during stable engine speed; during engine speed variation, the fuel can be supplied into the respective cylinders in the engine from the fuel tank with the fuel level being higher than the preset value.

In said prevention method, said scuffing inhibitor may be lubricant injected into the respective cylinders in the engine, lubricant injection rate being increased during engine speed variation.

In said prevention method, abrasive may be used as said scuffing inhibitor, the fuel having the abrasive mixed therewith may be supplied into the respective cylinders in the engine during a period from engine speed variation till the engine speed becoming stable.

The invention is also directed to an apparatus for prevention of scuffing in an internal combustion engine for a vessel wherein fuel stored in a fuel tank is evacuated, is pumped by a fuel pump and is supplied through fuel injection valves into respective cylinders of the engine,
the apparatus comprising a speed detector for detecting an engine speed and an engine speed monitor for monitoring the engine speed detected by said speed detector, the fuel with fuel level higher than a preset value being supplied into respective cylinders in the engine while a scuffing inhibitor is supplied into the respective cylinders in the engine.

In said prevention apparatus, the engine speed is detected by the speed detector, the engine speed detected by said speed detector being monitored by the engine speed monitor, the fuel with the fuel level higher than the preset value and with a low concentration of hard particles being supplied into the respective cylinders in the engine while the scuffing inhibitor is supplied into the respective cylinders in the engine.

As a result, during engine speed variation, the hard particles are prevented from entering in large quantity into the engine while the scuffing inhibitor is supplied into respective cylinders in the engine, so that the sliding state of the piston ring does not become severe against the cylinder liner, initiation points of scuffing become hard to form, and no scuffing is generated in succeeding high-load operations.

Said prevention apparatus may comprise
a plurality of fuel tanks,
an evacuation line with evacuation valves for evacuation of the fuel from any desired fuel tank,
level detectors each for detecting the fuel level of a corresponding fuel tank and
a fuel tank potential switchover indicator for indicating, in cases where existence of the fuel tank with the fuel level being reduced below the preset value is revealed on the basis of the detection signals from said level detectors, and during stable engine speed revealed on the basis of the engine speed monitor signal from said engine speed monitor, potential supply of the fuel into the respective cylinders in the engine preferentially from said fuel tank with the fuel level being reduced below the preset value,
the fuel being supplied to the respective cylinders in the engine from the fuel tank with the fuel level higher than the preset value during engine speed variation revealed on the basis of the engine speed monitor signal from said engine speed monitor.

The above prevention apparatus may comprise
a lubricant tank with lubricant stored as said scuffing inhibitor,
a lubricant injection line with a lubricant input mechanism and a lubricant input control mechanism for injection of the lubricant stored in said lubricant tank into the respective cylinders in the engine,
a lubricant injection rate controller for outputting an opening degree command signal for increase of lubricant injection rate to said lubricant input control mechanism in the lubricant injection line during engine speed variation revealed on the basis of the engine speed monitor signal from said engine speed monitor.

Said prevention apparatus may comprise
an abrasive tank with abrasive stored as said scuffing inhibitor,
an abrasive mixing line with an abrasive pump and an abrasive mixing valve for mixing of the abrasive stored in said abrasive tank into the fuel and
an abrasive mixing controller for outputting a mixing command signal to the abrasive mixing valve in said abrasive mixing line, during a period from engine speed variation till the engine speed becoming stable, on the basis of the monitor signal from said engine speed monitor.

### Advantageous Effects of Invention

A method and an apparatus for prevention of scuffing in an internal combustion engine for a vessel according to the invention have excellent effects and advantages that during engine speed variation or during a period from just thereafter till the engine speed becoming stable, the sliding state of the piston ring can be alleviated from becoming severe against the cylinder liner and generation of the scuffing can be prevented.

### Brief Description of Drawings

Fig. 1 is an overall schematic diagram showing a first embodiment of the invention;
Fig. 2 is a diagram showing an example of stable engine speed monitored by an engine speed monitor in the first embodiment of the invention;
Fig. 3 is a diagram showing an example of engine speed variation monitored by the engine speed monitor in the first embodiment of the invention;
Fig. 4 is an overall schematic diagram showing a second embodiment of the invention; and
Fig. 5 is an overall schematic diagram showing a third embodiment of the invention.

### Reference Signs List

- 1: fuel tank
- 2: evacuation line
- 3: fuel pump
- 6: fuel injection valve
- 7: engine
- 8: cylinder
- 9: evacuation valve
- 10: level detector
- 10a: detection signal
- 11: speed detector
- 11a: detection signal
- 12: engine speed monitor
- 12a: engine speed monitor signal
- 13: fuel tank potential switchover indicator
- 14: lubricant tank
- 15: lubricant pump (lubricant input mechanism)
- 16: lubricant flow rate control valve (lubricant input control mechanism)
- 17: lubricant injection line
- 18: lubricant injection rate controller
- 18a: opening degree command signal
- 19: abrasive tank
- 20: abrasive pump
- 21: abrasive mixing valve
- 22: abrasive mixing line
- 23: abrasive mixing controller
- 23a: mixing command signal

### Description of Embodiments

Embodiments of the invention will be described in conjunction with the attached drawings.

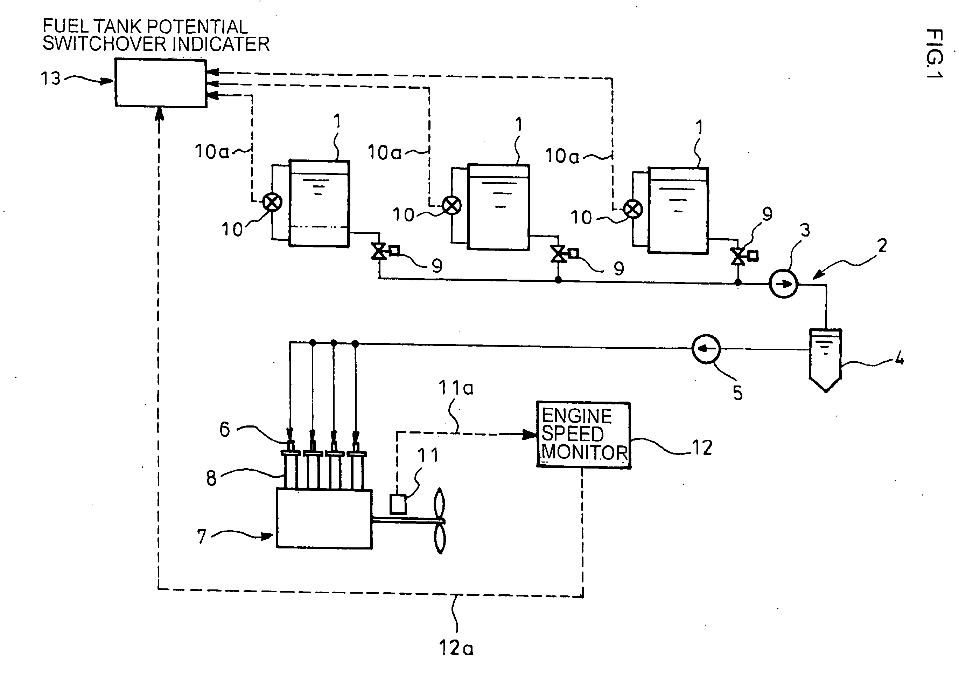

Fig. 1 shows a first embodiment of the invention in which, with respect to an internal combustion engine for a vessel with fuel stored in a fuel tank 1 being evacuated through a bottom of the tank 1 into an evacuation line 2, pumped by a fuel pump 3 and supplied through a settling tank 4, a supply pump 5 and fuel injection valves 6 into respective cylinders 8 in an engine 7, a plurality of (three in the example of Fig. 1) fuel tanks 1 filled with fuel are installed and the evacuation line 2 is provided with evacuation valves 9 so that fuel may be evacuated from any desired tank 1. Each of the fuel tanks 1 is provided with a level detector 10 for detection of fuel level. The engine 7 is provided with a speed detector 11 for detection of the engine speed and an engine speed monitor 12 for monitoring of an engine speed detection signal 11a from the detector 11. Further provided is a fuel tank potential switchover indicator 13 which, in cases where existence of the fuel tank 1 with fuel level being reduced below a preset value is revealed on the basis of the detection signals 10a from the level detectors 10 and only during stable engine speed under a smooth water condition (a condition of no ruffling water surface) which is revealed on the basis of an engine speed monitor signal 12a from the engine speed monitor 12, indicates potential supply of the fuel into the respective cylinders 8 in the engine 7 from the fuel tank 1 with the fuel level being reduced below the preset value; the indicator 13 is constructed such that the fuel is supplied into the respective cylinders 8 in the engine 7 from the fuel tank 1 with the fuel level being not reduced below the preset value, i.e., from the tank 1 with the fuel level being higher than the preset value during engine speed variation revealed on the basis of the signal 12a from the monitor 12. Since an amount of hard particles contained in fuel will differ depending upon kind of the fuel and therefore the preset value of the fuel level in the fuel tank 1 will differ depending upon kind of the fuel, the preset value is preliminarily determined such that searches are preliminarily made as to for example shape and concentration analyses of the hard particles to determine as the preset value a lower limit where the hard particles can be kept in a low concentration upon evacuation of the fuel from the fuel tank 1.

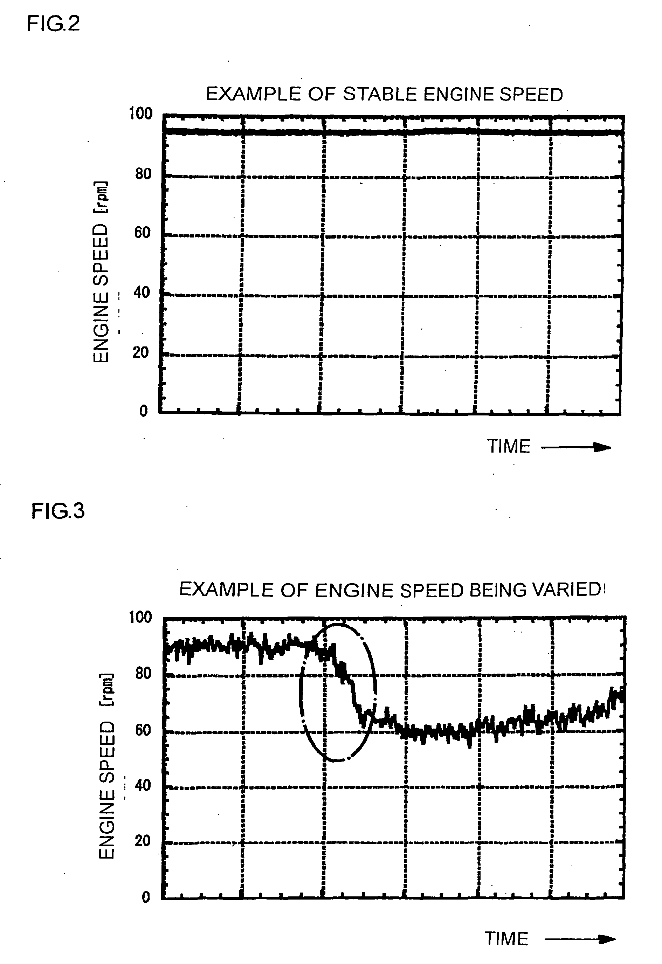

The state of stable engine speed means that, for example as shown in Fig. 2, the engine speed variation per unit time (an hour) is less than 3%; the state of the engine speed variation means that, for example as shown in Fig. 3, the engine speed variation per unit time (an hour) is 15% or more.

Since fuel cannot be replenished to the fuel tanks in a ship under way, a total capacity of the fuel tanks 1 is to sufficiently cover one marine navigation distance, fuel being replenished to the tanks before a fuel level of the fuel tank 1 from which fuel is finally evacuated is reduced below the preset value.

Next, mode of operation of the above embodiment will be disclosed.

In the embodiment, among the plural fuel tanks 1 filled with fuel, the evacuation valve 9 of any desired fuel tank 1 is opened so that the fuel is evacuated through the bottom of the fuel tank 1 into the evacuation line 2 and is pumped by the fuel pump 3 to a settling tank 4, the fuel once stored in the settling tank 4 being pumped by the supply pump 5 into the fuel injection valves 6 from which the fuel is injected into the respective cylinders 8 in the engine 7.

In this case, the speed of the engine 7 is detected by the speed detector 11 and the detection signal 11a therefrom is inputted into the engine speed monitor 12 where the detection signal 11a of the engine speed detected by the detector 11 is monitored so that a crew can know whether the engine speed is stable or varied now, the engine speed monitor signal 12a from the monitor 12 being inputted into the fuel tank potential switchover indicator 13.

The fuel levels of the fuel tanks 1 are detected by the level detectors 10, respectively, and the fuel level detection signals 10a from the level detectors 10 are inputted into the fuel tank potential switchover indicator 13; in the indicator 13, it is determined from the detection signals 10a from the level detectors 10 whether there exits the fuel tank 1 with the fuel level being reduced below the preset value. If there exists the fuel tank 1 with the fuel level being reduced below the preset value as shown by imaginary line in Fig. 1, the indicator 13 indicates potential supply of the fuel into the respective cylinders 8 in the engine 7 preferentially from the fuel tank 1 with the fuel level being reduced below the preset value during stable engine speed on smooth water which fact is revealed on the basis of the engine speed monitor signal 12a from the engine speed monitor 12.

In a case where at this moment the fuel is being evacuated from the fuel tank 1 with the fuel level being not reduced below the preset value, the crew opens the evacuation valve 9 of the fuel tank 1 with the fuel level being reduced below the preset value and closes the evacuation valves 9 of the other fuel tanks 1 only when the indicator 13 indicates potential supply of the fuel into the respective cylinders 8 from the fuel tank 1 with the fuel level being reduced below the preset value. As a result, the fuel is supplied into the respective cylinders 8 in the engine 7 from the fuel tank 1 with the fuel level being reduced below the preset value.

It is to be noted that even if the fuel with a great amount of hard particles is supplied to the respective cylinders 8 in the engine 7 from the fuel tank 1 with the fuel level being reduced below the preset value during stable engine speed in, for example, smooth water, the sliding state of the piston ring does not become so sever against the cylinder liner and there is little fear for generation of scuffing.

On the other hand, during engine speed variation revealed on the basis of the engine speed monitor signal 12a from the engine speed monitor 12, the fuel tank potential switchover indicator 13 becomes not indicative of potential supply of the fuel into the respective cylinders 8 in the engine 7 from the fuel tank 1 with the fuel level being reduced below the preset value, so that the crew closes the evacuation valve 9 of the tank 1 with the fuel level being reduced below the preset value and opens any one of the other tanks 1 each with the fuel level being not reduced below the preset value. As a result, the fuel is supplied from the fuel tank 1 with the fuel level being not reduced below the preset value and with no high concentration of hard particles accumulated on the bottom through the fuel pump 3, settling tank 4, supply pump 5 and fuel injection valves 6 into the respective cylinders 8 in the engine 7.

As a result, during engine speed variation, the hard particles do not enter in large quantity into the engine 7 and the sliding state of the piston ring against the cylinder liner becomes not severe, so that initiation points for generation of scuffing becomes difficult to form and no scuffing occurs in the succeeding high-load operations.

Thus, during engine speed variation upon arrival in and leaving from a port or during passage through a canal, the sliding state of the piston ring can be alleviated from becoming sever against the cylinder liner and generation of scuffing can be prevented.

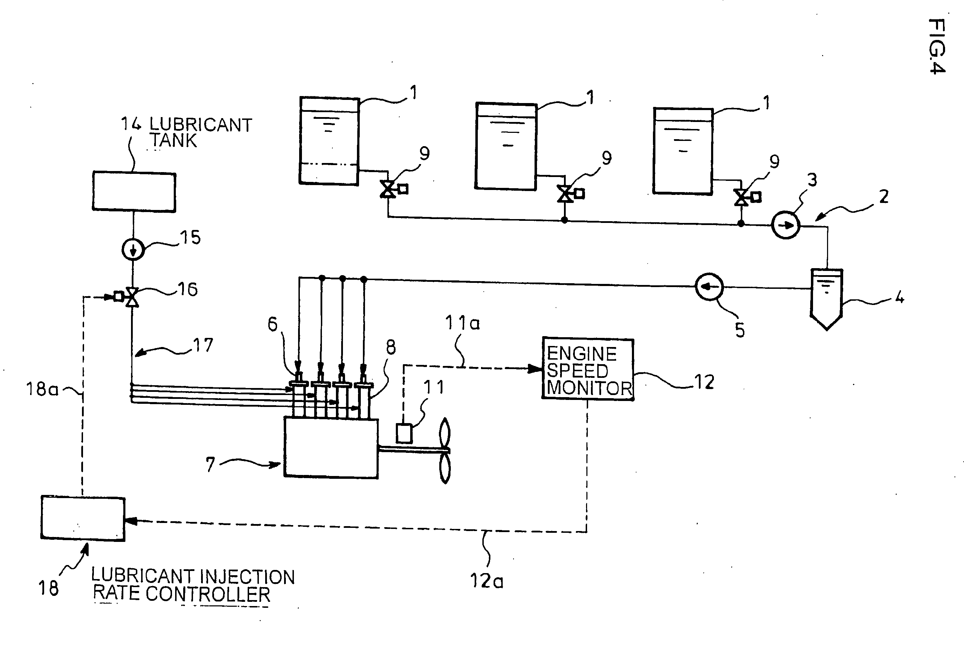

Fig. 4 shows a second embodiment of the invention in which parts similar to those in Fig. 1 are represented by the same reference numerals. Although its fundamental structure is similar to that in Fig. 1, this embodiment is characterized in that, as shown in Fig. 4, it comprises
a lubricant tank 14 with lubricant stored as scuffing inhibitor,
a lubricant injection line 17 with a lubricant pump 15 as lubricant input mechanism and with a lubricant flow rate control valve 16 as lubricant input control mechanism for injection of lubricant stored in the lubricant tank 14 into the respective cylinders 8 in the engine 7 and
a lubricant injection rate controller 18 which outputs an opening degree command signal 18a for increasing a lubricant injection rate of the lubricant flow rate control valve 16 in the lubricant injection line 17 during engine speed variation (see Fig. 3) revealed on the basis of the engine speed monitor signal 12a from the engine speed monitor 12.

In the embodiment shown in Fig. 4, the engine speed is detected by the speed detector 11, the engine speed detected by the speed detector 11 being monitored by the engine speed monitor 12. During engine speed variation revealed on the basis of the engine speed monitor signal 12a from the engine speed monitor 12, the opening degree command signal 18a is outputted from the lubricant injection rate controller 18 into the lubricant flow rate control valve 16 in lubricant injection line 17 so as to increase the lubricant injection rate, so that the lubricant as scuffing inhibitor in an amount more than that during stable engine speed is supplied into the respective cylinders 8 in the engine 7.

It is to be noted that, when the lubricant injection rate during stable engine speed (see Fig. 2) is, say, on the order of 1 g/kw-h, the lubricant injection rate increased to 1.5 g/kw-h or so becomes effective during engine speed variation.

As a result, during engine speed variation, the lubricant as scuffing inhibitor is supplied in an amount more than that during stable engine speed into the respective cylinders 8 in the engine 7, so that lubrication is facilitated; even if the hard particles exist in much quantity, they may be washed away by the lubricant, so that the sliding state of the piston ring becomes not severe against the cylinder liner, initiation points of scuffing becoming hard to form, no scuffing being generated in succeeding high-load operations.

Thus, also in the embodiment shown in Fig. 4, just like the embodiment shown in Fig. 1, during engine speed variation, for example, upon arrival in and leaving from a port or during passage through a canal, the sliding state of the piston ring can be alleviated from becoming severe against the cylinder liner, generation of scuffing being prevented.

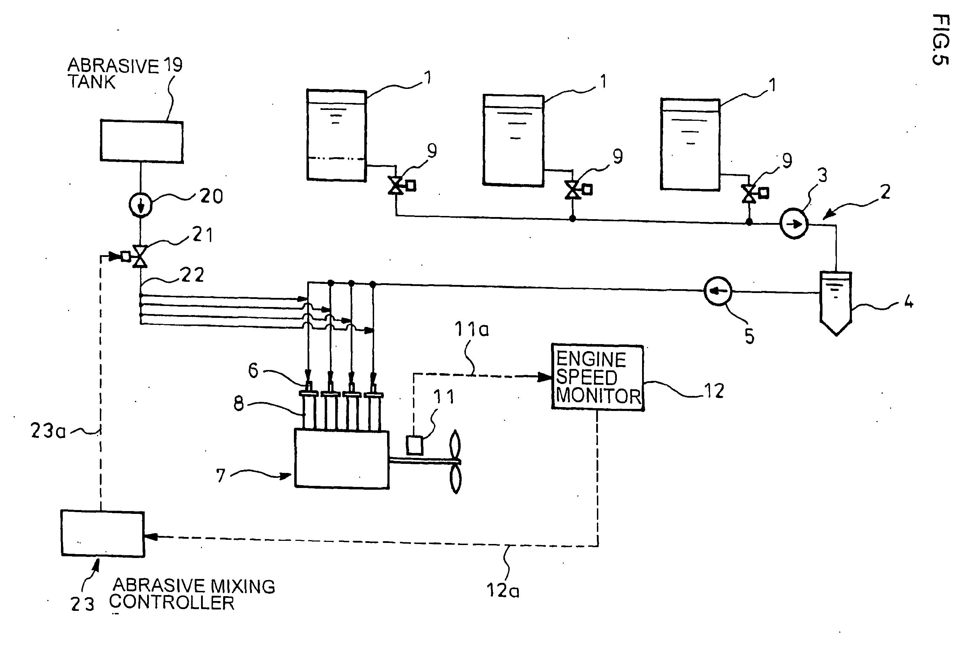

Fig. 5 shows a third embodiment of the invention in which parts similar to those in Figs. 1 and 4 are represented by the same reference numerals. Although its fundamental structure is similar to that in Figs. 1 and 4, the embodiment is characterized in that it comprises, as shown in Fig. 5,
an abrasive tank 19 with slurry-like abrasive stored as scuffing inhibitor,
an abrasive mixing line 22 with an abrasive pump 20 and an abrasive mixing valve 21 for mixing of an abrasive stored in the abrasive tank 19 into the fuel and
an abrasive mixing controller 23 which outputs a mixing command signal 23a to the abrasive mixing valve 21 in the abrasive mixing line 22 during or after engine speed variation based on the engine speed monitor signal 12a from the engine speed monitor 12.

The abrasive used may be generally so-called engine compound or the like which generates fine abrasive particles upon combustion of the fuel in the respective cylinders 8 in the engine 7.

In the embodiment shown in Fig. 5, the engine speed is detected by the speed detector 11, the engine speed detected by the speed detector 11 being monitored by the engine speed monitor 12. During or after engine speed variation revealed on the basis of the engine speed monitor signal 12a from the engine speed monitor 12, a mixing command signal 23a is outputted from an abrasive mixing controller 23 to an abrasive mixing valve 21 in an abrasive mixing line 22, the abrasive as scuffing inhibitor being supplied together with the fuel into the respective cylinders 8 in the engine 7.

It is to be noted to be effective that an mixed amount of abrasive during the engine speed variation or during a period from completion of engine speed variation till the engine speed becoming stable is 3% or so of the fuel supply amount at that time.

As a result, during engine speed variation or during a period from completion of engine speed variation till the engine speed becoming stable, the abrasive as scuffing inhibitor is supplied together with the fuel into the respective cylinders 8 in the engine 7, so that upon combustion of the fuel minute abrasive particles are generated to grind and remove initiation points of scuffing and no scuffing is generated in succeeding high-load operations.

Thus, in the embodiment shown in Fig. 5, during engine speed variation upon, for example, arrival in and leaving from a port or during passage through a canal or during a period from completion of engine speed variation till the engine speed becoming stable, the sliding state of the piston ring can be alleviated from becoming severe against the cylinder liner and generation of scuffing can be prevented.

It is to be understood that a method and an apparatus for prevention of scuffing in an internal combustion engine for a vessel according to the present invention are not limited to the above-mentioned embodiments and that various changes and modifications may be made without departing from the scope of the claims of the invention. For example, the number of the fuel tank may be two or more than three.

## Claims

1. A method for prevention of scuffing in an internal combustion engine for a vessel wherein a plurality of fuel tanks (1) are provided for evacuation of the fuel from any desired fuel tank (1), fuel stored in a fuel tank (1) is evacuated, is pumped by a fuel pump (3) and is supplied via fuel injection valves (6) into respective cylinders (8) in the engine (7),
said method which comprises detecting and monitoring engine speed, fuel with fuel level higher than a preset value being supplied into the respective cylinders (8) in the engine (7) while a scuffing inhibitor is supplied into the respective cylinders (8) in the engine (7), in cases where there exists a fuel tank (1) with the fuel level being reduced below the preset value, whereby
a) during stable engine speed, the fuel is supplied into the respective cylinders (8) in the engine (7) preferentially from said fuel tank (1) with the fuel level being reduced below the preset value,
b) during engine speed variation, the fuel being supplied into the respective cylinders (8) in the engine (7) from the fuel tank (1) with said fuel level being higher than the preset value.

2. A method for prevention of scuffing in an internal combustion engine for a vessel as claimed in claim 1 wherein said scuffing inhibitor is lubricant injected into the respective cylinders (8) in the engine (7), lubricant injection rate being increased during engine speed variation.

3. A method for prevention of scuffing in an internal combustion engine for a vessel as claimed in claim 1 wherein said scuffing inhibitor is abrasive, the fuel having the abrasive mixed therewith being supplied into the respective cylinders (8) in the engine (7) during a period from engine speed variation till the engine speed becoming stable.

4. An apparatus for prevention of scuffing in an internal combustion engine for a vessel wherein fuel stored in a fuel tank (1) is evacuated, is pumped by a fuel pump (3) and is supplied via fuel injection valves (6) into respective cylinders (8) in the engine (7),
said apparatus comprising
a speed detector (11) for detecting an engine speed and an engine speed monitor (12) for monitoring the engine speed detected by said speed detector (11), fuel with fuel level higher than a preset value being supplied into respective cylinders (8) in the engine (7) while the scuffing inhibitor is supplied into the respective cylinders (8) in the engine (7),
a plurality of fuel tanks (1),
an evacuation line (2) with evacuation valves (9) for evacuation of the fuel from any desired fuel tank (1),
level detectors (10) each for detecting the fuel level of the corresponding fuel tank (1) and
a fuel tank potential switchover indicator (13) for indicating, in cases where existence of the fuel tank (1) with the fuel level being reduced below the preset value is revealed on the basis of the detection signals (10a) from said level detectors (10), whereby
a) during stable engine speed revealed on the basis of the engine speed monitor signal (12a) from said engine speed monitor (12), potential supply of the fuel into the respective cylinders (8) in the engine (7) preferentially from said fuel tank (1) with the fuel level being reduced below the preset value,
b) during engine speed variation on the basis of the engine speed monitor signal (12a) from said engine speed monitor (12), the fuel being supplied to the respective cylinders (8) in the engine (7) from the fuel tank (1) with the fuel level higher than the preset value.

5. An apparatus for prevention of scuffing in an internal combustion engine for a vessel as claimed in claim 4 comprising
a lubricant tank (14) with lubricant stored as said scuffing inhibitor,
a lubricant injection line (17) with a lubricant input mechanism (15) and a lubricant input control mechanism (16) for injection of the lubricant stored in said lubricant tank (14) into the respective cylinders (8) in the engine (7),
a lubricant injection rate controller (18) for outputting an opening degree command signal (18a) for increase of lubricant injection rate to said lubricant input control mechanism (16) in the lubricant injection line (17) during engine speed variation on the basis of the engine speed monitor signal (12a) from said engine speed monitor (12).

6. An apparatus for prevention of scuffing in an internal combustion engine for a vessel as claimed in claim 4 comprising
an abrasive tank (19) with abrasive stored as said scuffing inhibitor,
an abrasive mixing line (22) with an abrasive pump (20) and an abrasive mixing valve (21) for mixing of the abrasive stored in said abrasive tank (19) into the fuel and
an abrasive mixing controller (23) for outputting a mixing command signal (23a) to the abrasive mixing valve (21) in said abrasive mixing line (22), during a period from engine speed variation till the engine speed becoming stable, on the basis of the engine speed monitor signal (12a) from said engine speed monitor (12).

## Patentansprüche

1. Verfahren zur Verhinderung von Reibverschleiß in einer Brennkraftmaschine für ein Schiff, wobei mehrere Kraftstoffbehälter (1) vorgesehen sind für die Entleerung des Kraftstoffs aus einem beliebigen, gewünschten Kraftstoffbehälter (1) und wobei der Kraftstoff, der in einem Kraftstoffbehälter (1) gespeichert ist, entleert wird, über eine Kraftstoffpumpe (3) gepumpt wird und über Kraftstoffstoffeinspritzventile (6) den jeweiligen Zylindern (8) in der Maschine (7) zugeführt wird,
wobei das Verfahren das Detektieren und Überwachen der Maschinendrehzahl umfasst, wobei Kraftstoff mit einem Kraftstoffpegel, der höher als ein vorbestimmter Wert ist, den jeweiligen Zylindern (8) in der Maschine (7) zugeführt wird, während in Fällen, in denen ein Kraftstoffbehälter (1) mit einem Kraftstoffpegel vorhanden ist, der unter den vorbestimmten Wert verringert worden ist, ein Schutzmittel gegen Reibverschleiß den jeweiligen Zylindern (8) in der Maschine (7) zugeführt wird, wobei
a) während einer stabilen Maschinendrehzahl der Kraftstoff vorzugsweise aus dem Kraftstoffbehälter (1) mit dem Kraftstoffpegel, der unter den vorbestimmten Wert verringert worden ist, den jeweiligen Zylindern (8) in der Maschine (7) zugeführt wird,
b) während einer Veränderung der Maschinendrehzahl der Kraftstoff aus dem Kraftstoffbehälter (1) mit dem Kraftstoffpegel, der höher als der vorbestimmte Wert ist, in die jeweiligen Zylinder (8) in der Maschine (7) zugeführt wird.

2. Verfahren zur Verhinderung von Reibverschleiß in einer Brennkraftmaschine für ein Schiff nach Anspruch 1, wobei das Schutzmittel gegen Reibverschleiß ein Schmiermittel ist, das in die jeweiligen Zylinder (8) in der Maschine (7) eingespritzt wird, wobei die Einspritzgeschwindigkeit des Schmiermittels während einer Veränderung der Maschinendrehzahl erhöht wird.

3. Verfahren zur Verhinderung von Reibverschleiß in einer Brennkraftmaschine für ein Schiff nach Anspruch 1, wobei das Schutzmittel gegen Reibverschleiß abschleifend ist, wobei der Kraftstoff mit dem Schleifmittel, das damit gemischt worden ist, den jeweiligen Zylindern (8) in der Maschine (7) während einer Periode zugeführt wird, die von einer Veränderung der Maschinendrehzahl bis zum Erreichen eines stabilen Zustands der Maschinendrehzahl dauert.

4. Vorrichtung zur Verhinderung von Reibverschleiß in einer Brennkraftmaschine für ein Schiff, wobei Kraftstoff, der in einem Kraftstoffbehälter (1) gespeichert ist, entleert wird, über eine Kraftstoffpumpe (3) gepumpt wird und über Kraftstoffstoffeinspritzventile (6) den jeweiligen Zylindern (8) in der Maschine (7) zugeführt wird,
wobei die Vorrichtung umfasst:
einen Drehzahldetektor (11) zum Detektieren der Maschinendrehzahl und einen Maschinendrehzahlmonitor (12) zum Überwachen der Maschinendrehzahl durch den Drehzahldetektor (11), wobei Kraftstoff mit einem Kraftstoffpegel, der höher als ein vorbestimmter Wert ist, den jeweiligen Zylindern (8) in der Maschine (7) zugeführt wird, während das Schutzmittel gegen Reibverschleiß n jeweiligen Zylindern (8) in der Maschine (7) zugeführt wird,
mehrere Kraftstoffbehälter (1),
eine Entleerungsleitung (2) mit Entleerungsventilen (9) für die Entleerung des Kraftstoffs aus einem beliebigen, gewünschten Kraftstoffbehälter (1),
eine Kraftstoffbehälterpotential-Umschaltanzeigevorrichtung (13), um in Fällen, in denen das Vorhandensein des Kraftstoffbehälters (1) mit dem Kraftstoffpegel, der unter den vorbestimmten Wert verringert worden ist, offenbart wird, dies auf der Basis der Detektionssignale (10a) von den Pegeldetektoren (10) anzuzeigen, wobei
a) während einer stabilen Maschinendrehzahl, die auf der Basis des Signals (12a) des Maschinendrehzahlmonitors von dem Maschinendrehzahlmonitor (12) offenbart wird, eine potentielle Zufuhr des Kraftstoffs vorzugsweise aus dem Kraftstoffbehälter (1) mit dem Kraftstoffpegel, der unter den vorbestimmten Wert verringert worden ist, in die jeweiligen Zylinder (8) in der Maschine (7) stattfindet,
b) während einer Veränderung der Maschinendrehzahl auf der Basis des Signals (12a) des Maschinendrehzahlmonitors von dem Maschinendrehzahlmonitor (12) der Kraftstoff aus dem Kraftstoffbehälter (1) mit dem Kraftstoffpegel, der höher als der vorbestimmte Wert ist, den jeweiligen Zylindern (8) in der Maschine (7) zugeführt wird.

5. Vorrichtung zur Verhinderung von Reibverschleiß in einer Brennkraftmaschine für ein Schiff nach Anspruch 4, die umfasst:
einen Schmiermittelbehälter (14) mit einem Schmiermittel, das als das Schutzmittel gegen Reibverschleiß gespeichert ist,
eine Einspritzleitung (17) für das Schmiermittel mit einem Schmiermitteleingangsmechanismus (15) und mit einem Schmiermitteleingangssteuermechanismus (16) für die Einspritzung des Schmiermittels, das in dem Schmiermittelbehälter (14) gespeichert ist, in die jeweiligen Zylinder (8) in der Maschine (7),
eine Steuereinheit (18) für die Einspritzgeschwindigkeit des Schmiermittels, um während einer Veränderung der Maschinendrehzahl auf der Basis des Signals (12a) des Maschinendrehzahlmonitors von dem Maschinendrehzahlmonitor (12) ein Öffnungsgradsteuersignal (18a) für die Erhöhung der Einspritzgeschwindigkeit des Schmiermittels an den Schmiermitteleingangssteuermechanismus (16) in der Einspritzleitung (17) für das Schmiermittel auszugeben.

6. Vorrichtung zur Verhinderung von Reibverschleiß in einer Brennkraftmaschine für ein Schiff nach Anspruch 4, die umfasst
einen Schleifmittelbehälter (19) mit dem Schleifmittel, das als Schutzmittel gegen Reibverschleiß gespeichert ist,
eine Schleifmittelmischleitung (22) mit einer Schleifmittelpumpe (20) und einem Schleifmittelmischventil (21), um das Schleifmittel, das in dem Schleifmittelbehälter (19) gespeichert ist, in den Kraftstoff zu mischen, und
eine Schleifmittelmischsteuereinheit (23), um während einer Periode, die von einer Veränderung der Maschinendrehzahl bis zum Erreichen eines stabilen Zustands der Maschinendrehzahl dauert, auf der Basis des Signals (12a) des Maschinendrehzahlmonitors von dem Maschinendrehzahlmonitor (12) ein Mischungssteuersignal (23a) an das Schleifmittelmischventil (21) in der Schleifmittelmischleitung (22) auszugeben.

## Revendications

1. Procédé destiné à empêcher l'usure par frottement dans un moteur marin à combustion interne, dans lequel une pluralité de réservoirs de combustible (1) sont prévus pour l'évacuation du combustible de l'un quelconque des réservoirs de combustible (1) souhaités, le combustible stocké dans un réservoir de combustible (1) est évacué, est pompé par une pompe de combustible (3) et est amené, via des soupapes d'injection de combustible (6), dans les cylindres (8) respectifs dans le moteur (7),
ledit procédé comprenant les étapes consistant à détecter et surveiller la vitesse du moteur, le combustible ayant le niveau de combustible supérieur à une valeur préréglée, étant amené dans les cylindres (8) respectifs dans le moteur (7) alors qu'un inhibiteur d'usure par frottement est amené dans les cylindres (8) respectifs dans le moteur (7), dans des cas dans lesquels il existe un réservoir de combustible (1) avec le niveau de combustible qui est inférieur à la valeur préréglée, moyennant quoi :
a) pendant une vitesse de moteur stable, le combustible est amené dans les cylindres (8) respectifs dans le moteur (7) de préférence à partir dudit réservoir de combustible (1) avec le niveau de combustible qui est réduit au-dessous de la valeur préréglée,
b) pendant une variation de vitesse du moteur, le combustible est amené dans les cylindres (8) respectifs dans le moteur (7) à partir du réservoir de combustible (1) avec ledit niveau de combustible qui est supérieur à la valeur préréglée.

2. Procédé destiné à empêcher l'usure par frottement dans un moteur marin à combustion interne selon la revendication 1, dans lequel ledit inhibiteur d'usure par frottement est un lubrifiant injecté dans les cylindres (8) respectifs dans le moteur (7), le taux d'injection de lubrifiant étant augmenté pendant la variation de vitesse du moteur.

3. Procédé destiné à empêcher l'usure par frottement dans un moteur marin à combustion interne selon la revendication 1, dans lequel ledit inhibiteur d'usure par frottement est abrasif, le combustible ayant l'abrasif mélangé avec ce dernier, est amené dans les cylindres (8) respectifs dans le moteur (7) pendant une période allant de la variation de vitesse du moteur jusqu'à la stabilisation de la vitesse du moteur.

4. Appareil destiné à empêcher l'usure par frottement dans un moteur marin à combustion interne, dans lequel le combustible stocké dans un réservoir de combustible (1) est évacué, est pompé par une pompe de combustible (3) et est amené via des soupapes d'injection de combustible (6) dans des cylindres (8) respectifs dans le moteur (7),
ledit appareil comprenant :
un détecteur de vitesse (11) pour détecter une vitesse du moteur et un dispositif de surveillance de vitesse de moteur (12) pour surveiller la vitesse du moteur détectée par ledit détecteur de vitesse (11), le combustible ayant un niveau de combustible supérieur à une valeur préréglée étant amené dans les cylindres (8) respectifs dans le moteur (7) alors que l'inhibiteur d'usure par frottement est amené dans les cylindres (8) respectifs dans le moteur (7),
une pluralité de réservoirs de combustible (1),
une conduite d'évacuation (2) avec les soupapes d'évacuation (9) pour l'évacuation du combustible de l'un quelconque des réservoirs de combustible (1) souhaités,
des détecteurs de niveau (10), chacun pour détecter le niveau de combustible du réservoir de combustible (1) correspondant, et
un indicateur de commutation potentiel de réservoir de combustible (13) pour indiquer, dans les cas dans lesquels l'existence du réservoir de combustible (1) ayant le niveau de combustible inférieur à la valeur préréglée est divulguée sur la base des signaux de détection (10a) provenant desdits détecteurs de niveau (10), moyennant quoi :
a) pendant la vitesse de moteur stable divulguée sur la base du signal de surveillance de vitesse de moteur (12a) provenant dudit dispositif de surveillance de vitesse de moteur (12), l'alimentation potentielle du combustible a lieu dans les cylindres (8) respectifs dans le moteur (7) de préférence à partir dudit réservoir de combustible (1) ayant le niveau de combustible inférieur à la valeur préréglée,
b) pendant la variation de vitesse du moteur sur la base du signal de surveillance de vitesse du moteur (12a) provenant dudit dispositif de surveillance de vitesse de moteur (12), le combustible est amené aux cylindres (8) respectifs dans le moteur (7) à partir du réservoir de combustible (1) ayant le niveau de combustible supérieur à la valeur préréglée.

5. Appareil destiné à empêcher l'usure par frottement dans un moteur marin à combustion interne selon la revendication 4, comprenant :
un réservoir de lubrifiant (14) avec le lubrifiant stocké en tant que dit inhibiteur d'usure par frottement,
une conduite d'injection de lubrifiant (17) avec un mécanisme d'entrée de lubrifiant (15) et un mécanisme de commande d'entrée de lubrifiant (16) pour l'injection du lubrifiant stocké dans ledit réservoir de lubrifiant (14) dans les cylindres (8) respectifs dans le moteur (7),
un organe de commande de taux d'injection de lubrifiant (18) pour émettre un signal de commande de degré d'ouverture (18a) pour augmenter le taux d'injection de lubrifiant vers ledit mécanisme de commande d'entrée de lubrifiant (16) dans la conduite d'injection de lubrifiant (17) pendant une variation de vitesse de moteur en fonction du signal de dispositif de surveillance de vitesse de moteur (12a) provenant dudit dispositif de surveillance de vitesse de moteur (12).

6. Appareil destiné à empêcher l'usure par frottement dans un moteur marin à combustion interne selon la revendication 4, comprenant :
un réservoir d'abrasif (19) avec de l'abrasif stocké en tant que dit inhibiteur d'usure par frottement,
une conduite de mélange d'abrasif (22) avec une pompe d'abrasif (20) et une soupape de mélange d'abrasif (21) pour mélanger l'abrasif stocké dans ledit réservoir d'abrasif (19) dans le combustible, et
un organe de commande de mélange d'abrasif (23) pour émettre un signal de commande de mélange (23a) vers la soupape de mélange d'abrasif (21) dans ladite conduite de mélange d'abrasif (22), pendant une période allant de la variation de vitesse de moteur jusqu'à la stabilisation de la vitesse du moteur, sur la base du signal de surveillance de vitesse de moteur (12a) provenant dudit dispositif de surveillance de vitesse de moteur (12).
